# EUROPÄISCHE PATENTSCHRIFT

(11) **EP 2 766 597 B1**
(45) Veröffentlichungstag und Bekanntmachung des Hinweises auf die Patenterteilung: **11.05.2022**
(21) Anmeldenummer: 12805753.6
(22) Anmeldetag: 15.10.2012
(51) Int. Cl.: F02P 13/00, F02B 23/06, F02F 1/24, F02B 43/10, F02P 19/02

(54) **BRENNRAUM EINES DIESELMOTORS, VERFAHREN ZUR ZÜNDUNG EINES KRAFTSTOFF-LUFT-GEMISCHES IN EINEM BRENNRAUM EINES DIESELMOTORS UND DIESELMOTOR**
DIESEL ENGINE COMBUSTION CHAMBER, METHOD FOR IGNITING A FUEL-AIR MIXTURE IN A COMBUSTION CHAMBER OF A DIESEL ENGINE AND DIESEL ENGINE
CHAMBRE DE COMBUSTION D'UN MOTEUR DIESEL, PROCÉDÉ D'ALLUMAGE D'UN MÉLANGE CARBURANT-AIR DANS UNE CHAMBRE DE COMBUSTION D'UN MOTEUR DIESEL, ET MOTEUR DIESEL ASSOCIÉ

(30) Priorität: 14.10.2011 DE 102011116372
(43) Veröffentlichungstag der Anmeldung: 20.08.2014
(73) Patentinhaber: Borissovskiy, Vladimir, 04103 Leipzig (DE)
(72) Erfinder: Borissovskiy, Vladimir, 04103 Leipzig (DE)
(74) Vertreter: Hecht, Jan-David
(86) Internationale Anmeldenummer: PCT/IB2012/002237
(87) Internationale Veröffentlichungsnummer: WO 2013/054188

(56) Entgegenhaltungen:
- EP-A2- 2 336 550
- EP-A2- 2 336 550
- WO-A1-2004/001221
- WO-A1-2004/059144
- WO-A1-2005/080788
- WO-A1-2005/080788
- DE-A1- 3 509 381
- DE-A1- 3 509 381
- JP-U- S 508 326
- RU-C2- 2 371 600
- US-A- 5 136 994

## Beschreibung

Die vorliegende Erfindung betrifft einen Brennraum eines Dieselmotors nach dem Oberbegriff von Anspruch 1, ein Verfahren zur Zündung eines Kraftstoff-Luft-Gemisches in einem Brennraum eines Dieselmotors nach dem Oberbegriff von Anspruch 104 und einen Dieselmotor nach dem Oberbegriff von Anspruch 12.

### Gebiet der Technik

Die Erfindung bezieht sich auf die Gebiete Maschinenbau und Motorenbau und kann in unterschiedlichen Typen von Dieselmotoren zur Anwendung kommen; ihre Realisierung erfolgt durch die Gestaltung einer speziellen Form des Brennraumes sowie durch den gleichzeitigen Einsatz eines in bestimmter Weise orientierten Zündinitiators für das Kraftstoff-Luft-Gemisch.

Die Erfindung gewährleistet eine effektivere Umwandlung der kinetischen Energie der Moleküle des Kraftstoffes in Nutzarbeit, d. h. eine Leistungs- und Wirkungsgradsteigerung des Dieselmotors.

### Stand der Technik

Bekannt ist der Brennraum eines Kolbenmotors, der durch Vertiefungen im Kolbenboden sowie im Zylinderkopf gestaltet ist und die eine zylindrische Form besitzt (Urheberschein der UdSSR Nr. 337547, Kl. F 02 B 23/08, 1972.

Der mit einem zylinderförmigen Brennraum, aber nicht mit den erforderlichen Zündungsvarianten für das Kraftstoff-Luft-Gemisch ausgestattete Kolbenmotor hat eine geringe Leistung und einen niedrigen Wirkungsgrad infolge der uneffektiven Umwandlung der kinetischen Energie der Moleküle des Kraftstoffes in Nutzarbeit.

Bekannt ist der Brennraum eines Dieselmotors, der durch Vertiefungen im Zylinderkopf und im Kolbenboden gestaltet ist und ein Ventil mit Erhöhung besitzt, wobei das Ventil in die Vertiefung des Kolbenbodens hineinragt (Patent DE 3145073, Class F 02 B 45/10, 1983).

Eine solche Brennraumkonstruktion und das Fehlen der erforderlichen Zündvarianten für das Kraftstoff-Luft-Gemisch gestatten keine effektive Umwandlung der kinetischen Energie der Moleküle des Kraftstoffes in Nutzarbeit sowie keine Leistungssteigerung des Motors und auch keine Erhöhung seines Wirkungsgrades.

Bekannt sind Varianten von Kolbenmotor-Brennräumen, deren Ausführungen in einer ebenen Kolbenbodenfläche und mindestens einer Vertiefung im Zylinderkopf, oder in einer ebenen Zylinderkopffläche und mindestens einer Vertiefung in der ebenen Kolbenbodenfläche, oder in mindestens zwei Vertiefungen mit je einer im Zylinderkopf und einer in der Kolbenbodenfläche oder mit einer Vertiefung in der Kolbenbodenfläche und in mindestens einer Vertiefung in der Fläche des Zylinderkopfes besteht. Die Vertiefungen besitzen die Form einer Pyramide, eines Pyramidenstumpfes, eines Kegels oder Kegelstumpfes, einer Halbkugel, eines Halbkugelsegments, eines Paraboloides oder einer Stufe im Längsschnitt des Brennraumes oder die Form einer spiralförmigen oder ringförmigen Nut im Querschnitt des Brennraumes (Patent der Russischen Föderation Nr. 2249718, Kl. 02 F1/21, F 02 F3128, F 02 B23100, 2005).

Die Mehrzahl dieser Anwendungsvarianten kann beim Dieselmotor keine effektive Umwandlung der kinetischen Energie der Moleküle des Kraftstoffes in Nutzleistung gewährleisten. Der Nachteil der besten dieser Brennraum-Varianten besteht im Fehlen der erforderlichen Entzündungsvarianten für das Kraftstoff-Luft-Gemisch, und dadurch ist keine maximal effektive Umwandlung der kinetischen Energie der Moleküle des Kraftstoffes in Nutzleistung, keine Leistungssteigerung des Motors und auch keine Erhöhung seines Wirkungsgrades möglich.

Wenn in einem Gefäß N Gasmoleküle vorhanden sind, so werden sich, wie man weiß, in einem beliebigen Zeitraum N/3 Moleküle längs zu jeder Bewegungsrichtung bewegen, wobei sich die Hälfte von ihnen (d. h. N/6 Moleküle) längs gegenüber der vorhandenen Bewegungsrichtung in einer Richtung und die andere Hälfte in der anderen Richtung bewegen werden (Saweljew I. W. Kurs der allgemeinen Physik in 4 Bänden, Band 1, Seite 363. Moskau, "Knorus" 2009).

Dies betrifft auch die Gase, die sich im Ergebnis der Verbrennung des Kraftstoff-LuftGemisches im Brennraum des Dieselmotors bilden.

Bei der Verwendung traditioneller Brennräume, die aus den Zylinderwänden sowie aus der Kolbenboden- und der Zylinderkopffläche bestehen, wird der größte Teil der Energie der sich ausdehnenden Gase demzufolge nicht wirksam verbraucht, da die Nutzarbeit nur von denjenigen Molekülen des Kraftstoffes (der Verbrennungsprodukte) erbracht wird, die auf die Oberfläche des Kolbenbodens wirken. Dabei wird die maximale Nutzarbeit nur von denjenigen Molekülen erzeugt, die senkrecht auf die ebene Kolbenbodenfläche wirken.

Die auf die Zylinderwände senkrecht wirkenden Gasmoleküle leisten überhaupt keine Arbeit für die Bewegung des Kolbens in Richtung des unteren Totpunkts.

Da der Großteil der Gasmoleküle seine Wirkung an die Zylinderwände abgibt, wird die kinetische Energie dieser Moleküle nicht effektiv genutzt, und die Nutzarbeit solcher Moleküle ist gering, und dies hat einen geringen Wirkungsgrad sowie eine ungenügende Leistung des Dieselmotors zur Folge.

Die EP 2 336 550 E2 beschreibt einen Glühstift (glow-plug)-Verbrennungsmotor, bei der der Glühstift längs einer Brennraumachse angeordnet ist.

Die DE 35 09 381 A1 beschreibt einen Motorbrennraum mit einer Form, die sich aus Kegeln und Zylindern oder Teilen davon zusammensetzt.

### Offenlegung (Beschreibung) der Erfindung

Die Aufgabe der Erfindung besteht darin, einen Brennraum eines Dieselmotors anzugeben, mit dem eine effizientere Verbrennung ermöglicht wird. Insbesondere sollen einige Varianten des speziell gestalteten Brennraumes des Dieselmotors angegeben werden, deren Anwendung zur Energieumverteilung zwischen den Freiheitsgraden der Moleküle des Kraftstoffes in der erforderlichen Weise führt. Weiterhin sollen auch ein Verfahren zur Zündung eines Kraftstoff-Luft-Gemisches in einem Brennraum eines Dieselmotors und Dieselmotoren angegeben werden.

Diese Aufgabe wird gelöst mit einem Brennraum eines Dieselmotors nach Anspruch 1, einem Verfahren zur Zündung eines Kraftstoff-Luft-Gemisches in einem Brennraum eines Dieselmotors nach Anspruch 104 und einem Dieselmotor nach Anspruch 12. Vorteilhafte Weiterbildungen sind in den abhängigen Unteransprüchen angegeben.

Die Erfindung ermöglicht eine Verbesserung der Nutzarbeit, die von den Molekülen des Kraftstoffes verrichtet wird, sowie eine Erhöhung der Leistung und des Wirkungsgrades des Dieselmotors erbringen.

Der bei der Anwendung der empfohlenen Erfindung durch die Vorsehung der Vertiefung und des besonderen Zündinitiators erzielte technische Effekt besteht in der Energieumverteilung zwischen den Freiheitsgraden der Moleküle des Kraftstoffes in einer solchen Weise, dass die maximale Energie auf die Freiheitsstufe entfällt, die mit der Vorwärtsbewegung der Moleküle in Längsrichtung der Bewegungsachse des Kolbens einhergeht (oder mit anderen Worten, es erfolgt eine äquivalente Verringerung der Anzahl der Freiheitsstufen der Moleküle des Kraftstoffes), und demzufolge entsteht keine chaotische, sondern eine zielgerichtete Bewegung der Moleküle des Kraftstoffes in Richtung Kolben, dadurch werden die Bedingungen für die Entstehung, Aufrechterhaltung und mehrfache Reflektierung von mindestens einer Schlagwelle innerhalb eines Taktes, deren Bewegung im Arbeitszylinder längs der Bewegungsachse des Kolbens erfolgt, geschaffen. Dies führt zu einer effektiveren Umwandlung der kinetischen Energie der Moleküle des Kraftstoffes in Nutzarbeit, d. h. zu einer Erhöhung des Wirkungsgrades des Dieselmotors.

Wesentlich ist bei der vorliegenden Erfindung, dass der Zündinitiator längs zur Brennraumachse angeordnet ist und angepasst ist, eine lineare Selbstzündung längs zur Brennraumachse anzuregen. Dadurch stellen sich im Zusammenhang mit der erfindungsgemäß vorgesehenen Vertiefung die besonderen Vorteile ein. Die Anordnung längs zur Brennraumachse schließt ein Liegen auf der Brennraumachse ein, aber auch Anordnungen parallel zur Brennraumachse.

Erst dadurch wird nämlich eine solche Energieumverteilung zwischen den Freiheitsgraden der Moleküle des Kraftstoffes gewährleistet, dass die von den Molekülen des Dieselkraftstoffes verrichtete Nutzarbeit und demzufolge der Wirkungsgrad des Motors wesentlich erhöht werden können. Genauer gesagt wird ein kombinatorischer Effekt durch die besondere Brennraumgeometrie mit der Vertiefung im Zusammenwirken mit dem speziellen Zündinitiator bewirkt. Dabei wird erreicht, dass eine derartige Energieumverteilung zwischen den Freiheitsgraden der Moleküle des Dieselkraftstoffes bewirkt wird, dass die maximale Energie auf denjenigen Freiheitsgrad entfällt, der mit der Vorwärtsbewegung der Moleküle in die Längsrichtung zur Bewegungsachse des Kolbens einhergeht. Es besteht also keine chaotische, sondern eine zielgerichtete Bewegung der Moleküle des Dieselkraftstoffes in Richtung Kolben, wodurch die Bedingungen geschaffen werden für die Entstehung, Aufrechterhaltung und mehrfache Reflektion von mindestens einer Schlagwelle innerhalb eines Taktes, deren Bewegung im Arbeitszylinder längs der Bewegungsachse des Kolbens erfolgt.

Genauer gesagt, ermöglicht die Brennraumgeometrie ein Hin- und Herpendeln der Schlagwelle entlang der Längsachse des Brennraumes, wobei die besondere Geometrie der Vertiefung die Umlenkung des Zündimpulses von einer radialen Richtung in Längsrichtung der Brennraumachse bewirkt. Solche Brennraumgeometrien waren zwar schon aus der WO 2004/059144 A1 bekannt, allerdings nicht die Kombination mit dem besondern Zündinitiator.

Bisher waren zwar auch schon Zündinitiatoren bekann, diese bewirkten jedoch stets eine punktuelle Zündung, so dass sich ein kugelförmiger Zündimpuls ausbildete. Von diesem kugelförmigen Zündimpuls werden naturgemäß nur einzelne Raumwinkelabschnitte durch die Vertiefung in Richtung der Längsachse des Brennraumes umgelenkt, während große Raumwinkelbereiche überhaupt keinen Impuls in Längsrichtung beitragen.

Dies wird mit der vorliegenden Erfindung dadurch verbessert, dass nunmehr der Zündinitiator angepasst ist, eine lineare Selbstzündung längs der Brennraumachse anzuregen. Anstelle einer punktförmigen oder chaotischen Selbstzündung entsteht hierbei nämlich kein kugelförmiger Zündimpuls, der von einem Zentrum ausgeht, sondern es entsteht ein zylinderförmiger Zündimpuls, bei dem im Wesentlichen nur radiale Impulsbestandteile in Bezug auf die Brennraumlängsachse vorliegen. Diese radialen Impulsbestandteile können nun in ihre Gesamtheit mittels der Vertiefung in Längsrichtung zur Brennraumachse und damit zu Bewegungsachse ausgerichtet werden.

Während also bei einer punktuellen oder chaotischen Selbstzündung nur einzelne Raumwinkelbereiche des Zündimpulses durch die Vertiefung in Längsrichtung zur Bewegungsachse ausgerichtet werden können, betrifft dies bei der erfindungsgemäß verwendeten linearen Selbstzündung im wesentlichen den vollständigen Zündimpuls, da dieser im wesentlichen nur aus radial wirkenden Impulsen und (wenn man die Deckfläche des Zylinderimpulses betrachtet) in Längsrichtung der Bewegungsachse wirkenden Zündimpulsen besteht.

Durch die erfindungsgemäße Verwendung einer linearen Selbstzündung in Längsrichtung zur Brennraumachse kann also in Verbindung mit der Vertiefung der Wirkungsgrad des Dieselmotors bedeutend erhöht.

Bekanntermaßen entzündet sich Dieselkraftstoff bei einer bestimmten Temperatur selbst, wobei diese notwendige Temperatur durch die adiabatische Kompression der zugeführten Luft vor dem Einspritzen des Dieselkraftstoffs bereit gestellt wird. Eine Zündhilfe, beispielsweise in Form einer Glühkerze wird nur für den Startvorgang benötigt. Zur Umsetzung dieser erfindungsgemäßen Lehre wird der Fachmann nun geeignete Zündinitiatoren auswählen, die quasi als Keimzelle für den Selbstzündungsvorgang wirkt und so den Dieselkraftstoff zu einer Selbstzündung auf der Brennraumachse anregt.

Als solche Zündinitiatoren, die das Selbstzünden auf der Brennraumachse bewirken, können dabei sowohl die Glühkerzen selbst dienen, die hierzu mit einem Stab aus Metall oder Keramik entsprechend lang auszubilden sind, als auch auf der Brennraumachse angeordnete Stäbe aus Metall (beispielsweise Edelstahl), Keramik oder dergleichen für die Verbrennungstemperaturen unempfindliche Materialien.

Erfindungsgemäß ist also der Zündinitiator angepasst, im Wesentlichen über die gesamte Brennraumachse gleichzeitig die Selbstzündung anzuregen. "Gesamte Brennraumachse" meint hier die lichte Höhe zwischen Kolbenoberfläche und Zylinderkopffläche zum Zeitpunkt der Zündung, wobei sich die Vertiefung insbesondere über diese lichte Höhe erstreckt, d.h. die lichte Höhe im Wesentlichen vollständig innerhalb der Vertiefung liegt.

In einer besonders vorteilhaften Weiterbildung ist vorgesehen, dass zumindest ein Einspritzmittel, insbesondere Einspritzdüse, für das Einspritzen von Dieselkraftstoff und/oder Luft vorgesehen ist, wobei zumindest eines dieser Einspritzmittel so ausgerichtet ist, dass die Einspritzrichtung nicht identisch mit der Brennraumachse liegt. Zweckmäßig ist die Einspritzrichtung in einem Winkel von 30° bis 150°, bevorzugt von 60° bis 120°, insbesondere von 90° zur Brennraumachse ausgerichtet. Dann wird schon während des Einspritzens dem Dieselkraftstoff-Luft-Gemisch eine radiale Bewegungsrichtung vorgegeben, die sich positiv auf die Verbrennung auswirkt.

In diesem Zusammenhang ist es vorteilhaft, wenn die Einspritzmittel für Luft und die Einspritzmittel für den Dieselkraftstoff gegenüber der Brennraumachse symmetrisch angeordnet sind, wobei besonders bevorzugt die Einspritzrichtungen beider Einspritzmittel auf einer Achse liegen.

Der genannte technische Effekt wird besonders effektiv in jeder nachstehend aufgeführten Variante der Erfindung durch die Anwendung eines speziell gestalteten Brennraumes mit gleichzeitigem Einsatz eines Zündinitiators für das Kraftstoff-Luft-Gemisch erzielt, da dabei die Vertiefung so ausgestaltet sind, dass die Umlenkung besonders wirksam erfolgt.

Im Brennraum des Dieselmotors, der durch die ebene Kolbenbodenfläche und mindestens durch eine Vertiefung im Zylinderkopf gebildet wird, der gemäß der Erfindung die Form eines Kegels hat, dessen Spitze nicht zur Kolbenbodenfläche gerichtet ist, beträgt der Winkel zwischen der ebenen Kolbenbodenfläche und der Mantellinie des Kegels 40° -50°, der Radius der Kegelgrundfläche kann kleiner sein als der Zylinderradius oder diesem gleich sein. Als Zündinitiator kann die Kombination zwischen einer Glühkerze und einem Stahlstab oder einem Stab aus einem anderen Material mit hoher Wärmekapazität, die sich auf der Achse der Vertiefung befinden, dienen.

Bei der zweiten Variante des Dieselmotor-Brennraumes besitzt die Zylinderkopfvertiefung die Form eines Kegelstumpfes, dessen Deckfläche nicht zur ebenen Kolbenbodenfläche gerichtet ist, der Winkel zwischen der ebenen Kolbenbodenfläche und der Mantellinie des Kegelstumpfes beträgt 40° - 50°, der Radius der Grundfläche des Kegelstumpfes kann kleiner sein als der Zylinderradius oder diesem gleich sein. Als Zündinitiator kann die Kombination zwischen einer Glühkerze und einem Stahlstab oder einem Stab aus einem anderen Material mit hoher Wärmekapazität, die sich auf der Achse der Vertiefung befinden, dienen.

Bei der dritten Variante des Dieselmotor-Brennraumes besitzt die Zylinderkopfvertiefung eine stufenförmige Gestalt, die durch die Kombination zwischen einem Kegel und mindestens einem Kegelstumpf oder durch die Kombination aus mindestens zwei Kegelstümpfen gebildet wird, wobei der Winkel zwischen der ebenen Kolbenbodenfläche und den Mantellinien des Kegels und der Kegelstümpfe 40° - 50° beträgt, und der Radius der Grundfläche des größeren Kegelstumpfes kleiner als der Zylinderradius oder diesem gleich sein kann. Als Zündinitiator kann die Kombination zwischen einer Glühkerze und einem Stahlstab oder einen Stab aus einem anderen Material mit hoher Wärmekapazität, die sich auf der Achse der Vertiefung befinden, dienen.

Bei der vierten Variante wird der Dieselmotor-Brennraum durch die ebene Kolbenbodenfläche und mindestens durch eine Zylinderkopfvertiefung gebildet, und diese Vertiefung ist erfindungsgemäß als Ringnut oder als Kombination zwischen einer zentralen Vertiefung und mindestens einer Ringnut gestaltet, dabei haben die Vertiefungen im zentralen Längsschnitt des Brennraumes die Form eines Dreiecks, eines Trapezes oder einer Stufe, und der Winkel zwischen der ebenen Kolbenbodenfläche und den Mantellinien der Ringnut und der zentralen Vertiefung beträgt 40° - 50°. Als Zündinitiator kann die Kombination zwischen einer Glühkerze und einem Stahlstab oder einem Stab aus einem anderen Material mit hoher Wärmekapazität, die sich auf der Achse der zentralen Vertiefung befinden, dienen, und in der Ringnut kann sich ein zylindrischer Einsatz aus demselben Material befinden, wobei dieser Einsatz ebenfalls als Zündinitiator für das Kraftstoff-Luft-Gemisch dienen kann.

Bei der fünften Variante wird der Dieselmotor-Brennraum durch die ebene Fläche des Zylinderkopfes und mindestens durch eine Vertiefung im Kolbenboden gebildet, und diese Vertiefung ist erfindungsgemäß als Kegel ausgebildet, dessen Spitze nicht zur Zylinderkopffläche gerichtet ist, dabei beträgt der Winkel zwischen der ebenen Zylinderkopffläche und der Kegelmantellinie 40° - 50°, der Radius der Kegelgrundfläche kann kleiner sein als der Zylinderradius oder diesem entsprechen. Als Zündinitiator kann die Kombination zwischen einer Glühkerze und einem Stahlstab oder einen Stab aus einem anderen Material mit hoher Wärmekapazität, die sich auf der Achse der Vertiefung befinden, dienen.

Bei der sechsten Variante des Dieselmotor-Brennraumes besitzt die Kolbenbodenvertiefung die Form eines Kegelstumpfes, dessen Deckfläche nicht zum Zylinderkopf zeigt, dabei beträgt der Winkel zwischen der ebenen Zylinderkopffläche und der Mantellinie des Kegelstumpfes 40° - 50°, der Radius der Grundfläche des Kegelstumpfes kann kleiner sein als der Zylinderradius oder diesem entsprechen. Als Zündinitiator kann die Kombination zwischen einer Glühkerze und einem Stahlstab oder einem Stab aus einem anderen Material mit hoher Wärmekapazität, die sich auf der Achse der Vertiefung befinden, dienen.

Bei der siebenten Variante des Dieselmotor-Brennraumes besitzt die Kolbenbodenvertiefung die Form einer Stufe, die durch die Kombination zwischen einem Kegel und mindestens einem Kegelstumpf oder durch die Kombination von mindestens zwei Kegelstümpfen gebildet wird, dabei beträgt der Winkel zwischen der ebenen Zylinderkopffläche und der Mantellinie des Kegels der Kegelstümpfe 40° - 50°, der Radius der Grundfläche des größeren Kegelstumpfes kann kleiner sein als der Zylinderradius oder diesem gleich sein. Als Zündinitiator kann die Kombination zwischen einer Glühkerze und einem Stahlstab oder einem Stab aus einem anderen Material mit hoher Wärmekapazität, die sich auf der Achse der Vertiefung befinden, dienen.

Bei der achten Variante wird der Dieselmotor-Brennraum durch die ebene Fläche des Zylinderkopfes und mindestens durch eine Vertiefung in der Kolbenbodenfläche gebildet, und diese Vertiefung ist erfindungsgemäß als Ringnut oder als Kombination zwischen einer zusätzlichen zentralen Vertiefung und mindestens einer Ringnut gestaltet, dabei haben die Vertiefungen im zentralen Längsschnitt des Brennraumes die Form eines Dreiecks, eines Trapezes oder einer Stufe, und der Winkel zwischen der ebenen Zylinderkopffläche und den Mantellinien der Ringnut und der zentralen Vertiefung beträgt 40° - 50⁰. Als Zündinitiator kann die Kombination zwischen einer Glühkerze und einem Stahlstab oder einen Stab aus einem anderen Material mit hoher Wärmekapazität, die sich auf der Achse der zentralen Vertiefung befinden, dienen, und in der Ringnut kann sich ein zylindrischer Einsatz aus demselben Material befinden, wobei dieser Einsatz ebenfalls als Zündinitiator für das Kraftstoff-Luft-Gemisch dienen kann.

Bei allen aufgeführten Varianten ist der Nutzeffekt der Erfindung umso höher, je genauer die Bearbeitungsqualität der glatten Wände des Brennraumes ist.

Die oben genannten Vertiefungsformen, durch die der Brennraum der Dieselmotoren gestaltet wird, insbesondere in Kombination mit Zündinitiatoren für das Kraftstoff-Luft-Gemisch (Stab und zylindrischer Metalleinsatz mit hoher Wärmekapazität), gestatten eine vorteilhafte Bewegungslenkung der Moleküle des Kraftstoffes und gewährleisten, dass eine maximale Anzahl von Molekülen für die Arbeit genutzt werden kann. Das Fehlen von zylindrischen Wänden bei den empfohlenen Brennraumvarianten bei der Stellung des Kolbens im oberen Totpunkt stellt eine Verminderung des uneffektiven Energieverbrauchs bei den Molekülen des Kraftstoffes dar.

Die Anwendung der empfohlenen Brennraumvarianten führt insbesondere in Kombination mit Zündinitiatoren für das Kraftstoff-Luft-Gemisch (Stab und zylindrischer Metalleinsatz mit hoher Wärmekapazität) zur Verbesserung der Effektivität der Umwandlung der kinetischen Energie der Moleküle des Kraftstoffes in Nutzarbeit sowie zur Leistungssteigerung und zur Erhöhung des Wirkungsgrades des Dieselmotors.

Durch die maximal glatte Wandausführung bei jeder Brennraumvariante zwecks Unterdrückung der Wellenwirkung wird die Brennraumwanderhitzung verringert, da die Schlagwellen sowie die elektromagnetischen, optischen, infraroten und ultravioletten Wellen von den Brennraumwänden reflektiert werden. Die Wärmeverluste an der Brennraumwand sowie durch die Abgabe der Wärme an das Kühlmittel können somit verringert werden. Darüber hinaus kann die Zerstörung des Brennraumes durch überhöhte Temperaturen verhindert werden.

Die im Brennraum entstehenden Schall- und Schlagwellen erzeugen durch ihre Reflexion an der Brennraumwand zusätzliche Nutzarbeit. Dies führt zu einer zusätzlichen Erhöhung der Effektivität bei der Umwandlung der kinetischen Energie der Moleküle des Kraftstoffes in Nutzarbeit sowie zur Verbesserung der Motorleistung und des Wirkungsgrades des Dieselmotors.

Unabhängiger Schutz wird beansprucht für das erfindungsgemäße Zündverfahren und den erfindungsgemäßen Dieselmotor. Der erfindungsgemäße Dieselmotor ist in einer dem Fachmann bekannten Art und Weise aufgebaut und beinhaltet den erfindungsgemäßen Brennraum.

Sämtliche Merkmale der vorliegenden Erfindung lassen sich beliebig miteinander kombinieren, wenn nicht ausdrücklich etwas anderes angegeben ist.

Die Merkmale der vorliegenden Erfindung und weitere Vorteile werden im Folgenden anhand der Beschreibung bevorzugter Ausführungsbeispiele deutliche werden. Die Erläuterung der Erfindung erfolgt dabei mittels der rein schematischen Abbildungen:
- Fig. 1: zeigt den Längsschnitt durch den Brennraum, der durch die ebene Kolbenbodenfläche und die im Zylinderkopf vorhandene Vertiefung gebildet wird, die Vertiefung hat die Form eines Kegels, und der Zündinitiator befindet sich auf der Kegelachse;
- Fig. 2: zeigt einen Brennraum, bestehend aus der ebenen Zylinderkopffläche sowie aus der als Kegelstumpf gestalteten Vertiefung im Kolbenboden;
- Fig. 3: zeigt einen Brennraum, bestehend aus der ebenen Kolbenbodenfläche und aus dem mit einer stufenförmigen Vertiefung versehenen Zylinderkopf sowie den Brennraumlängsschnitt;
- Fig. 4: zeigt einen Brennraum, bestehend aus der ebenen Zylinderkopffläche sowie aus dem mit einer stufenförmigen Vertiefung versehenen Kolbenboden sowie den Brennraumlängsschnitt;
- Fig. 5: zeigt einen Brennraum, bestehend aus der ebenen Kolbenbodenfläche sowie aus der Kombination zwischen der zentralen Vertiefung und der Ringnut im Zylinderkopf, dabei besitzen die Vertiefungen im zentralen Längsschnitt des Brennraumes eine dreieckförmige Gestalt, die Ziffer 16 stellt den ringzylindrischen Einsatz in der Nut dar (diese Abbildung zeigt ebenfalls den Längsschnitt des Brennraumes, der durch sieben kegelförmige Vertiefungen im Kolbenboden oder im Zylinderkopf gebildet wird);
- Fig. 6: zeigt einen nicht erfindungsgemäß ausgebildeten Brennraum, bestehend aus der ebenen Zylinderkopffläche sowie aus der Kombination zwischen einer zusätzlichen zentralen Vertiefung und einer Ringnut im Kolbenboden, dabei besitzen die Vertiefungen im zentralen Längsschnitt des Brennraumes eine stufenförmige Gestalt (diese Abbildung zeigt auch den Längsschnitt des Brennraumes, der durch sieben stufenförmige Vertiefungen im Kolbenboden oder im Zylinderkopf gebildet wird);
- Fig. 7: zeigt den Querschnitt des in Fig. 6 dargestellten Brennraums (die Kombination zwischen der zentralen Vertiefung und einer Ringnut);
- Fig. 8: zeigt einen Brennraum, bestehend aus der ebenen Kolbenbodenfläche und aus dem Zylinderkopf mit sieben kegelförmigen Vertiefungen, sowie den Brennraumquerschnitt (der zentrale Längsschnitt dieses Brennraumes ist in Abb. 5 abgebildet)
- Fig. 9 bis 11: zeigen verschiedenen Ausgestaltungen des nicht erfindungsgemäß ausgebildeten Brennraumes hinsichtlich der Einspritzanordnung und
- Fig. 12 bis 15: zeigen verschiedenen Ausgestaltungen hinsichtlich der Gestaltung des Zündinitiators.

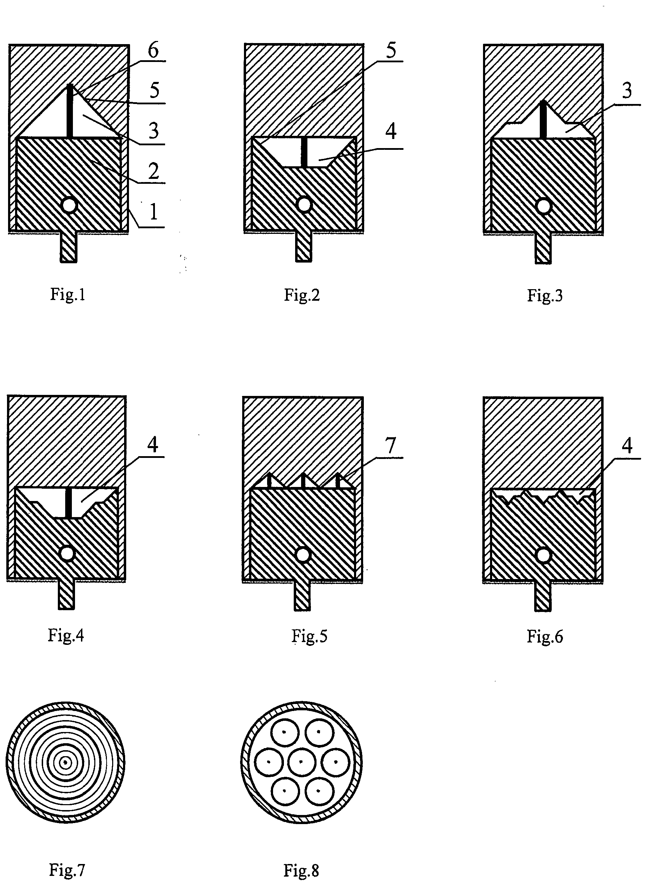

Es ist deutlich zu erkennen, dass der Brennraum des erfindungsgemäßen Dieselmotors einen Zylinder 1 und einen Kolben 2 aufweist. Der Brennraum wird durch die ebene Oberfläche des Kolbenbodens 2 und durch die Vertiefung 3 im Zylinderkopf 1 gebildet (vgl. beispielsweise Fig. 1). Der Brennraum kann auch durch die ebene Zylinderkopffläche 1 und durch die Vertiefung 4 im Kolbenboden 2 gebildet werden (vgl. beispielsweise Fig. 2). Alternativ (nicht gezeigt) können auch Vertiefungen im Kolben 2 und im Zylinderkopf 1 miteinander kombiniert werden.

Jede der Vertiefungen 3 und 4 kann die Form eines Kegels, eines Kegelstumpfes oder einer Stufe haben. Die Vertiefungen 3 und 4 können auch als Ringnut ausgeführt sein, die im Längsschnitt des Brennraumes die Form eines Dreiecks, eines Trapezes oder einer Stufe besitzt.

Die Brennraumwände 5 besitzen zwecks Reflektierung der Wellenwirkung eine maximale Bearbeitungsgüte. Weiterhin sind Zündinitiatoren 6, 6a, 6b vorgesehen und der Brennraum besitzt eine Brennraumachse 7. In den Fig. 1 bis 4 ist zu erkennen, dass sich der Zündinitiator 6 für das Kraftstoff-Luft-Gemisch auf der Vertiefungsachse befindet.

Der optimale Winkel zwischen dem Kolbenboden oder dem Zylinderkopf und der Mantellinie des Kegels oder des Kegelstumpfes beträgt 40° - 50°. Eine Verringerung des vorliegenden 40°-Winkels oder eine Vergrößerung des vorliegenden 50°-Winkels führt zur Verringerung Effektivität bei der Umwandlung der kinetischen Energie der Moleküle in Nutzarbeit.

Die Erfindung funktioniert wie folgt. Betrachten wir nun folgende Variante: die kegelförmige Vertiefung, der Winkel zwischen der ebenen Oberfläche und der Kegelmantellinie beträgt 45°, die Zündung des Kraftstoff-Luft-Gemisches verläuft gleichzeitig auf der gesamten Achse der Vertiefung mit dem Zündinitiator (Metallstab mit hoher Wärmekapazität).

Die Zündung des Kraftstoff-Luft-Gemisches durch den kombinierten Zündinitiator 6a, 6b längs zur Brennraumachse 7 gibt den Molekülen des Kraftstoffes (der Verbrennungsprodukte) gegenüber der Zündlinie eine radiale Bewegungsrichtung vor. Nach der Reflektierung an der Vertiefungswand 5 unter einem Winkel von 45° setzen die Moleküle ihre Bewegung längs zur Bewegungsrichtung des Kolbens auf parallelen, sich nicht überschneidenden Bewegungsbahnen fort, werden dann von der ebenen Oberfläche reflektiert und bewegen sich wiederum in Richtung der kegelförmigen Vertiefung, und dies geschieht in der Zykluszeit mehrfach. Dabei kommt es nicht zum Kontakt zwischen den Molekülen des Kraftstoffes und der Zylinderwandoberfläche, das heißt alle Moleküle verrichten eine Nutzarbeit. Da die von den Molekülen innerhalb eines Zeitabschnittes zurückgelegten Strecken gleich sind, bewegen sich die Moleküle in einer schmalen Front, die gegenüber der ebenen Kolbenboden- oder Zylinderkopffläche parallel ist, und dies unterbindet deren eventuelle Zusammenstöße und die Chaotisierung des Systems innerhalb einer langen Zeitdauer, die die Zykluszeit des Motors bedeutend überschreitet. Die entstehenden elektromagnetischen und Schlagwellen sowie die Gaspartikel mit hoher Energie werden von der glatten Brennraumoberfläche 5 reflektiert, wodurch deren Erwärmung verringert und eine effektive Umwandlung der kinetischen Energie sowohl der Gase als auch der Wellen in Nutzarbeit gewährleistet wird. Auf diese Weise wird der Druck auf den Kolben bedeutend erhöht und die Erwärmung des Zylinderblockes des Dieselmotors in hohem Maße verringert, und dies hat die Erhöhung seiner Lebensdauer zur Folge.

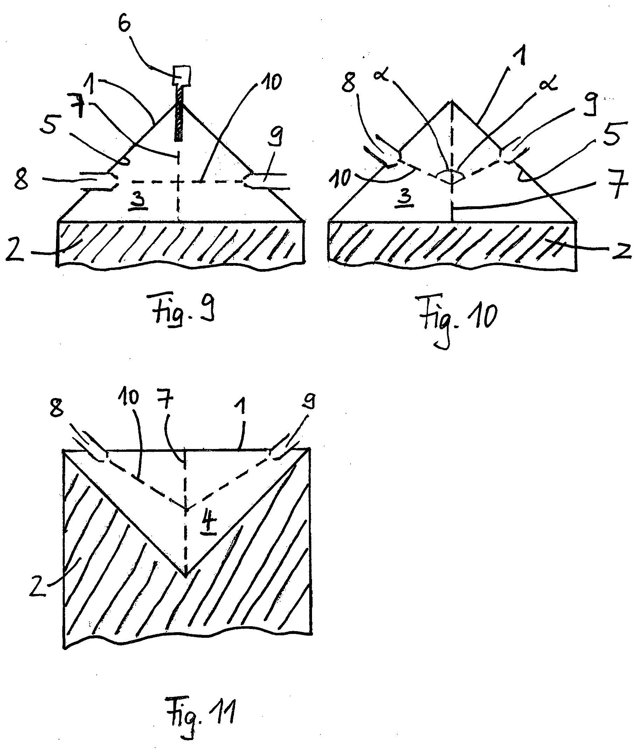

In Fig. 9 ist beispielhaft die Anordnung der Zündeinrichtung 6 im Zylinderkopf 1, die als lange Glühkerze 6 ausgebildet ist, und einer Einspritzdüse 8 für Luft und einer Einspritzdüse 9 für den Dieselkraftstoff gezeigt. Es ist zu erkennen, dass die Einspritzdüsen 8, 9 symmetrisch zueinander angeordnet sind, wobei die Einspritzrichtungen auf einer Linie 10 liegen. Diese Line 10 ist senkrecht zur Brennraumachse 7 angeordnet. Dadurch wird der maximale Effekt erzielt, da das sich ausbildende Dieselkraftstoff-Luft-Gemisch in Bezug auf die Brennraumachse 7 schon radiale Impulsanteile aufweist und außerdem das Gemischbild sehr symmetrisch sich ausbildet und die Gemischteile durch das Zusammenstoßen von Luft und Dieselkraftstoff sehr klein zerstäubt werden, was ebenfalls zu einer besseren Verbrennung führt.

In Fig. 10 sind die beiden Einspritzdüsen 8, 9 nicht senkrecht, sondern unter einem spitzen Winkel α in Bezug auf die Brennraumachse 7 angeordnet. Auch hier stellt sich ein zusätzlicher positiver Effekt ein, weil das Dieselkraftstoff-Luft-Gemisch radiale Bewegungsanteile aufweist.

Während die Fig. 9 und 10 eine Brennraumgeometrie mit einer Vertiefung 3 im Zylinderkopf 1 zeigen, stellt Fig. 11 schließlich eine Brennraumgeometrie mit einer Vertiefung 4 im Kolben 2 dar, wobei die Einspritzdüsen 8, 9 wiederum nicht senkrecht, sondern unter einem spitzen Winkel α in Bezug auf die Brennraumachse 7 angeordnet sind.

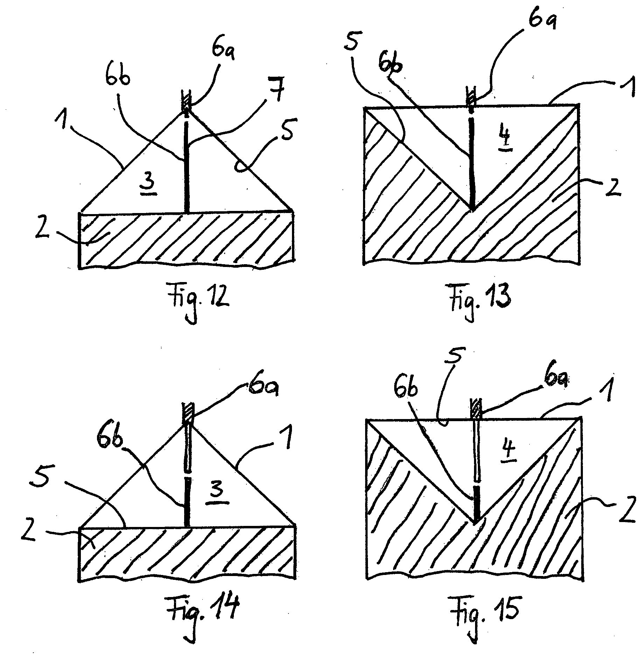

In den Fig. 12 bis 15 sind verschiedene Zündinitiatorvarianten in Verbindung mit unterschiedlichen Brennraumgeometrien näher gezeigt, wobei in den Fig. 12 und 14 die Vertiefung 3 im Zylinderkopf 1 und in den Fig. 13 und 15 die Vertiefung 4 im Kolbenboden 2 angeordnet sind. In den Fig. 12 und 13 ist der Zündinitiator 6 jeweils gemeinsam als kurze Glühkerze 6a und langer Stab 6b ausgebildet, während in den Fig. 14 und 15 der Zündinitiator jeweils gemeinsam als lange Glühkerze 6a mit kurzem Stab 6b ausgebildet ist. Der Stab 6b ist jeweils am Kolben 2 befestigt, beispielsweise angeschweißt, und die Glühkerze 6a jeweils am Zylinder 1. Alternativ könnte auch vorgesehen sein, dass der Stab 6b an der Glühkerze 6a befestigt ist.

Beim Starten des Dieselmotors dient die Glühkerze 6a als Zündhilfe und im Betrieb wirken Glühkerze 6a und Stab 6b gemeinsam als Zündinitiator 6 zum Anregen der Selbstzündung auf der Brennraumachse. Glühkerze 6a und Stab 6b überdecken gemeinsam im Wesentlichen die gesamte Brennraumachse 7, also die gesamte lichte Höhe des Brennraumes, so dass sich eine im Wesentlichen vollständige zylinderförmige Impulsverteilung nach dem Selbstzünden ergibt.

### Quellenverzeichnis

- 1.: Urheberschein der UdSSR Nr. 337547, Kl. F 02 B 23/08, 1972.
- 2.: Patent DE 3145073, Class F 02 B 45/10, 1983
- 3.: Patent der Russischen Föderation Nr. 2249718, Kl. 02 F1/21, F 02 F3/28, F 02 B23/00, 2005

- 4.: Saweljew I. W. Kurs der allgemeinen Physik in 4 Bänden, Band 1, Seite 363. Moskau, "Knorus" 2009

## Patentansprüche

1. Brennraum eines Dieselmotors, der einen Kolben (2) mit einer Kolbenbodenfläche und einen Zylinderkopf (1) mit einer Zylinderkopffläche aufweist und eine Brennraumachse (7) besitzt, wobei in der Kolbenbodenfläche und/oder in der Zylinderkopffläche zumindest eine Vertiefung (3, 4) vorgesehen ist, wobei ein Zündinitiator (6, 6a, 6b) für die Zündung des Kraftstoff-Luft-Gemisches vorgesehen ist, der längs zur Brennraumachse angeordnet ist, **dadurch gekennzeichnet, dass** der Zündinitiator (6, 6a, 6b) über die gesamte Länge der Vertiefung ausgebildet ist, wobei im Zylinderkopf (1) und/oder im Kolben (2) eine zentrale Vertiefung (3, 4) besteht, wobei der Zündinitiator (6, 6a, 6b) auf der Achse der zentralen Vertiefung (3, 4) angeordnet ist, wobei
i) der Zündinitiator ein Metall- oder Keramikstab (6) ist oder
ii) der Zündinitiator aus einer Glühkerze (6a) und einem Stab (6b) besteht, wobei der Stab ein Metall- oder Keramikstab ist,
und wobei der Zündinitiator (6, 6a, 6b) eine lineare Selbstzündung längs zur Brennraumachse (7) anregt,
wobei die Vertiefung im Zylinderkopf nach einer der folgenden Vorschriften gebildet ist:
a) die Vertiefung ist in der Zylinderkopffläche angeordnet und besitzt die Form eines Kegels, dessen Spitze nicht auf die Kolbenbodenfläche gerichtet ist, wobei der Zündinitiator auf der Kegelachse angeordnet ist, oder
b) die Vertiefung ist in der Zylinderkopffläche angeordnet und besitzt die Form eines Kegelstumpfes, dessen Deckfläche nicht zur Kolbenbodenfläche gerichtet ist, wobei der Zündinitiator auf der Achse des Kegelstumpfes angeordnet ist, oder
c) die Vertiefung ist in der Zylinderkopffläche angeordnet und besitzt eine stufenförmige Gestalt, die aus der Kombination zwischen einem Kegel und mindestens einem Kegelstumpf oder aus der Kombination von mindestens zwei Kegelstümpfen gebildet wird, wobei der Zündinitiator auf der Achse der Vertiefung angeordnet ist,
und/oder wobei die Vertiefung in der Kolbenbodenfläche nach einer der folgenden Vorschriften gebildet ist
d) die Vertiefung ist in der Kolbenbodenfläche angeordnet und die besitzt Form eines Kegels, dessen Spitze nicht auf die Zylinderkopffläche gerichtet ist, wobei der Zündinitiator auf der Achse der Vertiefung angeordnet ist, oder
e) die Vertiefung ist in der Kolbenbodenfläche angeordnet und besitzt die Form eines Kegelstumpfes, dessen Deckfläche nicht auf die Zylinderoberfläche gerichtet ist, wobei der Zündinitiator auf der Achse der Vertiefung angeordnet ist, oder
f) die Vertiefung ist in der Kolbenbodenfläche angeordnet und besitzt eine stufenförmige Gestalt, die aus der Kombination zwischen einem Kegel und mindestens einem Kegelstumpf oder aus der Kombination von mindestens zwei Kegelstümpfen gebildet wird, wobei der Zündinitiator auf der Achse der Vertiefung angeordnet ist,
wobei für die Vorschriften a) bis c) vorgesehen ist, dass der Winkel zwischen der ebenen Kolbenbodenfläche und der Mantellinie des Kegels und des Kegelstumpfes 40° - 50° beträgt und für die Vorschriften d) bis f) vorgesehen ist, dass der Winkel zwischen der ebenen Zylinderkopffläche und der Mantellinie des Kegels und des Kegelstumpfes 40° - 50° beträgt.

2. Brennraum nach Anspruch 1, **dadurch gekennzeichnet, dass** im Zylinderkopf (1) und/oder im Kolben (2) neben der zentralen Vertiefung (3, 4) mindestens eine Ringnut vorgesehen ist, wobei bevorzugt alle Vertiefungen im zentralen Längsschnitt des Brennraumes die Form eines Dreiecks, eines Trapezes oder einer Stufe besitzen.

3. Brennraum nach Anspruch 2, **dadurch gekennzeichnet, dass** der Winkel zwischen der ebenen Kolbenbodenfläche und den Mantellinien der Ringnut und der zentralen Vertiefung 40° - 50° beträgt und/oder dass der Winkel zwischen der ebenen Zylinderkopffläche und den Mantellinien der Ringnut und der zentralen Vertiefung 40° - 50° beträgt.

4. Brennraum nach einem der vorherigen Ansprüche, **dadurch gekennzeichnet, dass** der Stab (6b) aus dem Mittelpunkt der Kolbenbodenfläche bzw. dem Mittelpunkt der Vertiefung (4) im Kolben (2) herausragt.

5. Brennraum nach einem der vorherigen Ansprüche, **dadurch gekennzeichnet, dass** der Radius der Grundfläche des Kegels kleiner sein kann als der Zylinderradius oder diesem gleich sein und/oder dass der Radius der Grundfläche des Kegelstumpfes kleiner sein kann als der Zylinderradius oder diesem gleich sein.

6. Brennraum nach einem der vorherigen Ansprüche, **dadurch gekennzeichnet, dass** zumindest ein Einspritzmittel, insbesondere Einspritzdüse, für das Einspritzen von Kraftstoff und/oder Luft vorgesehen ist, wobei zumindest eines dieser Einspritzmittel so ausgerichtet ist, dass die Einspritzrichtung nicht identisch mit der Brennraumachse liegt, wobei vorteilhaft vorgesehen ist, dass die Einspritzrichtung in einem Winkel von 30° bis 150°, bevorzugt von 60° bis 120°, insbesondere von 90° zur Brennraumachse ausgerichtet ist.

7. Brennraum nach Anspruch 6, **dadurch gekennzeichnet, dass** die Einspritzmittel für Luft und die Einspritzmittel für den Kraftstoff gegenüber der Brennraumachse symmetrisch angeordnet sind, wobei besonders bevorzugt die Einspritzrichtungen beider Einspritzmittel auf einer Achse liegen.

8. Brennraum nach einem der vorherigen Ansprüche, **dadurch gekennzeichnet, dass** bei Vorhandensein von mehr als einer Vertiefung auf der Achse jeder zusätzlichen Vertiefung ein Stab angeordnet ist, der als zusätzlicher Zündinitiator für das Kraftstoff-Luft-Gemisch dient.

9. Brennraum nach einem der vorherigen Ansprüche in Verbindung mit Anspruch 2, **dadurch gekennzeichnet, dass** in die Ringnut ringzylindrische Einsätze, vorzugsweise aus Metall oder Keramik, eingepasst sind, die als zusätzliche Zündinitiatoren für das Kraftstoff-Luft-Gemisch dienen.

10. Verfahren zur Zündung eines Kraftstoff-Luft-Gemisches in einem Brennraum eines Dieselmotors, wobei der Brennraum einen Zylinder mit einer Zylinderkopffläche und einen Kolben mit einer Kolbenbodenfläche aufweist und eine Brennraumachse besitzt und eine Vertiefung in der Zylinderkopffläche und/oder der Kolbenbodenfläche vorgesehen ist, wobei längs zur Brennraumachse (7) ein Zündinitiator für die Zündung des Kraftstoff-Luft-Gemischs angeordnet wird, **dadurch gekennzeichnet, dass**
der Zündinitiator (6, 6a, 6b) über die gesamte Länge der Vertiefung ausgebildet ist, wobei im Zylinderkopf (1) und/oder im Kolben (2) eine zentrale Vertiefung (3, 4) besteht, wobei der Zündinitiator (6, 6a, 6b) auf der Achse der zentralen Vertiefung (3, 4) angeordnet ist, wobei
i) der Zündinitiator ein Metall- oder Keramikstab (6) ist oder
ii) der Zündinitiator aus einer Glühkerze (6a) und einem Stab (6b) besteht, wobei der Stab ein Metall- oder Keramikstab ist,
und wobei der Zündinitiator eine lineare Selbstzündung längs zur Brennraumachse anregt,
wobei die Vertiefung im Zylinderkopf nach einer der folgenden Vorschriften gebildet ist:
a) die Vertiefung ist in der Zylinderkopffläche angeordnet und besitzt die Form eines Kegels, dessen Spitze nicht auf die Kolbenbodenfläche gerichtet ist, wobei der Zündinitiator auf der Kegelachse angeordnet ist, oder
b) die Vertiefung ist in der Zylinderkopffläche angeordnet und besitzt die Form eines Kegelstumpfes, dessen Deckfläche nicht zur Kolbenbodenfläche gerichtet ist, wobei der Zündinitiator auf der Achse des Kegelstumpfes angeordnet ist, oder
c) die Vertiefung ist in der Zylinderkopffläche angeordnet und besitzt eine stufenförmige Gestalt, die aus der Kombination zwischen einem Kegel und mindestens einem Kegelstumpf oder aus der Kombination von mindestens zwei Kegelstümpfen gebildet wird, wobei der Zündinitiator auf der Achse der Vertiefung angeordnet ist,
und/oder wobei die Vertiefung in der Kolbenbodenfläche nach einer der folgenden Vorschriften gebildet ist
d) die Vertiefung ist in der Kolbenbodenfläche angeordnet und die besitzt Form eines Kegels, dessen Spitze nicht auf die Zylinderkopffläche gerichtet ist, wobei der Zündinitiator auf der Achse der Vertiefung angeordnet ist, oder
e) die Vertiefung ist in der Kolbenbodenfläche angeordnet und besitzt die Form eines Kegelstumpfes, dessen Deckfläche nicht auf die Zylinderoberfläche gerichtet ist, wobei der Zündinitiator auf der Achse der Vertiefung angeordnet ist, oder
f) die Vertiefung ist in der Kolbenbodenfläche angeordnet und besitzt eine stufenförmige Gestalt, die aus der Kombination zwischen einem Kegel und mindestens einem Kegelstumpf oder aus der Kombination von mindestens zwei Kegelstümpfen gebildet wird, wobei der Zündinitiator auf der Achse der Vertiefung angeordnet ist,
wobei für die Vorschriften a) bis c) vorgesehen ist, dass der Winkel zwischen der ebenen Kolbenbodenfläche und der Mantellinie des Kegels und des Kegelstumpfes 40° - 50° beträgt und für die Vorschriften d) bis f) vorgesehen ist, dass der Winkel zwischen der ebenen Zylinderkopffläche und der Mantellinie des Kegels und des Kegelstumpfes 40° - 50° beträgt.

11. Verfahren nach Anspruch 10, **dadurch gekennzeichnet, dass** ein Brennraum nach einem der Ansprüche 2 bis 9 verwendet wird.

12. Dieselmotor, **gekennzeichnet durch** einen Brennraum nach einem der Ansprüche 1 bis 9.

## Claims

1. Combustion chamber for a diesel engine, comprising a piston (2) having a piston head surface, and a cylinder head (1) having a cylinder head surface, and having a combustion chamber axis (7), wherein at least one depression (3, 4) is provided in the piston head surface and/or in the cylinder head surface, wherein an ignition initiator (6, 6a, 6b) is provided for igniting the fuel/air mixture, which initiator is arranged longitudinally with respect to the combustion chamber axis, **characterised in that** the ignition initiator (6, 6a, 6b) is formed over the entire length of the depression, wherein a central depression (3, 4) exists in the cylinder head (1) and/or in the piston (2), wherein the ignition initiator (6, 6a, 6b) is arranged on the axis of the central depression (3, 4), wherein
i) the ignition initiator is a metal or ceramic rod (6) or
ii) the ignition initiator consists of a glow plug (6a) and a rod (6b),
wherein the rod is a metal or ceramic rod,
and wherein the ignition initiator (6, 6a, 6b) prompts linear self-ignition longitudinally with respect to the combustion chamber axis (7),
wherein the depression in the cylinder head is formed according to one of the following provisions:
a) the depression is arranged in the cylinder head surface and is in the shape of a cone, the tip of which is not directed towards the piston head surface, wherein the ignition initiator is arranged on the cone axis, or
b) the depression is arranged in the cylinder head surface and is in the shape of a truncated cone, the top surface of which is not directed towards the piston head surface, wherein the ignition initiator is arranged on the axis of the truncated cone, or
c) the depression is arranged in the cylinder head surface has a stepped shape which is formed of the combination between a cone and at least one truncated cone, or of the combination of at least two truncated cones, wherein the ignition initiator is arranged on the axis of the depression,
and/or wherein the depression in the piston head surface is formed according to one of the following provisions
d) the depression is arranged in the piston head surface and is in the shape of a cone, the tip of which is not directed towards the cylinder head surface, wherein the ignition initiator is arranged on the axis of the depression, or
e) the depression is arranged in the piston head surface and is in the shape of a truncated cone, the top surface of which is not directed towards the cylinder surface, wherein the ignition initiator is arranged on the axis of the depression, or
f) the depression is arranged in the piston head surface has a stepped shape which is formed of the combination between a cone and at least one truncated cone, or of the combination of at least two truncated cones, wherein the ignition initiator is arranged on the axis of the depression,
wherein it is provided, for provisions a) to c), for the angle between the flat piston head surface and the generatrix of the cone and of the truncated cone to be 40° - 50°, and it is provided, for provisions d) to f), for the angle between the flat cylinder head surface and the generatrix of the cone and of the truncated cone to be 40° - 50°.

2. Combustion chamber according to claim 1, **characterised in that,** in addition to the central depression (3, 4) at least one annular groove is provided in the cylinder head (1) and/or in the piston (2) wherein preferably all the depressions in the central longitudinal section of the combustion chamber are in the shape of a triangle, a trapeze, or a step.

3. Combustion chamber according to claim 2, **characterised in that** the angle between the flat piston head surface and the generatrixes of the annular groove and the central depression is 40° - 50°, and/or **in that** the angle between the flat cylinder head surface and the generatrixes of the annular groove and the central depression is 40° - 50°.

4. Combustion chamber according to any of the preceding claims, **characterised in that** the rod (6b) protrudes from the centre of the piston head surface or the centre of the depression (4) in the piston (2).

5. Combustion chamber according to any of the preceding claims, **characterised in that** the radius of the base of the cone may be smaller than the cylinder radius or identical thereto, and/or **in that** the radius of the base of the truncated cone may be smaller than the cylinder radius or identical thereto.

6. Combustion chamber according to any of the preceding claims, **characterised in that** at least one injection means, in particular injection nozzle, is provided for injecting fuel and/or air, wherein at least one of said injection means is oriented such that the injection direction is not identical to the combustion chamber axis, wherein it is advantageously provided for the injection direction to be oriented at an angle of from 30° to 150°, preferably from 60° to 120°, in particular 90°, with respect to the combustion chamber axis.

7. Combustion chamber according to claim 6, **characterised in that** the injection means for air and the injection means for the fuel are arranged symmetrically opposite the combustion chamber axis, wherein the injection directions of both injection means are particularly preferably located on one axis.

8. Combustion chamber according to any of the preceding claims, **characterised in that,** in the event of more than one depression being present, a rod is arranged on the axis of each additional depression, which rod serves as an additional ignition initiator for the fuel/air mixture.

9. Combustion chamber according to any of the preceding claims in conjunction with claim 2, **characterised in that** annularly cylindrical inserts, preferably made of metal or ceramic, are fitted into the annular groove, which inserts serve as additional ignition initiators for the fuel/air mixture.

10. Method for ignition of a fuel/air mixture in a combustion chamber of a diesel engine, wherein the combustion chamber comprises a cylinder having a cylinder head surface and a piston having a piston head surface, and has a combustion chamber axis, and a depression is provided in the cylinder head surface and/or the piston head surface, wherein an ignition initiator for igniting the fuel/air mixture is arranged longitudinally with respect to the combustion chamber axis (7), **characterised in that** the ignition initiator (6, 6a, 6b) is formed over the entire length of the depression, wherein a central depression (3, 4) exists in the cylinder head (1) and/or in the piston (2), wherein the ignition initiator (6, 6a, 6b) is arranged on the axis of the central depression (3, 4), wherein
i) the ignition initiator is a metal or ceramic rod (6) or
ii) the ignition initiator consists of a glow plug (6a) and a rod (6b),
wherein the rod is a metal or ceramic rod,
and wherein the ignition initiator prompts linear self-ignition longitudinally with respect to the combustion chamber axis,
wherein the depression in the cylinder head is formed according to one of the following provisions:
a) the depression is arranged in the cylinder head surface and is in the shape of a cone, the tip of which is not directed towards the piston head surface, wherein the ignition initiator is arranged on the cone axis, or
b) the depression is arranged in the cylinder head surface and is in the shape of a truncated cone, the top surface of which is not directed towards the piston head surface, wherein the ignition initiator is arranged on the axis of the truncated cone, or
c) the depression is arranged in the cylinder head surface and has a stepped shape which is formed of the combination between a cone and at least one truncated cone, or of the combination of at least two truncated cones, wherein the ignition initiator is arranged on the axis of the depression,
and/or wherein the depression in the piston head surface is formed according to one of the following provisions
d) the depression is arranged in the piston head surface and is in the shape of a cone, the tip of which is not directed towards the cylinder head surface, wherein the ignition initiator is arranged on the axis of the depression, or
e) the depression is arranged in the piston head surface and is in the shape of a truncated cone, the top surface of which is not directed towards the cylinder surface, wherein the ignition initiator is arranged on the axis of the depression, or
f) the depression is arranged in the piston head surface has a stepped shape which is formed of the combination between a cone and at least one truncated cone, or of the combination of at least two truncated cones, wherein the ignition initiator is arranged on the axis of the depression,
wherein it is provided, for provisions a) to c), for the angle between the flat piston head surface and the generatrix of the cone and of the truncated cone to be 40° - 50°, and it is provided, for provisions d) to f), for the angle between the flat cylinder head surface and the generatrix of the cone and of the truncated cone to be 40° - 50°.

11. Method according to claim 10, **characterised in that** a combustion chamber according to any of claims 2 to 9 is used.

12. Diesel engine **characterised by** a combustion chamber according to any of claims 1 to 9.

## Revendications

1. Chambre de combustion d'un moteur diesel, qui présente un piston (2) avec une surface de tête de piston et une culasse (1) avec une surface de culasse et un axe de chambre de combustion (7), dans laquelle au moins un renfoncement (3, 4) est prévu dans la surface de tête de piston et/ou dans la surface de culasse, dans laquelle un amorceur d'allumage (6, 6a, 6b) est prévu pour l'allumage du mélange carburant-air, qui est disposé le long de l'axe de chambre de combustion, **caractérisée en ce que** l'amorceur d'allumage (6, 6a, 6b) est réalisé sur la totalité de la longueur du renfoncement, dans laquelle un renfoncement central (3, 4) existe dans la culasse (1) et/ou dans le piston (2), dans laquelle l'amorceur d'allumage (6, 6a, 6b) est disposé sur l'axe du renfoncement central (3, 4), dans laquelle
i) l'amorceur d'allumage est une barre en métal ou en céramique (6), ou
ii) l'amorceur d'allumage est constitué d'une bougie de préchauffage (6a) et d'une barre (6b),
dans laquelle la barre est une barre en métal ou en céramique,
et dans laquelle l'amorceur d'allumage (6, 6a, 6b) excite un auto-allumage linéaire le long de l'axe de chambre de combustion (7),
dans laquelle le renfoncement dans la culasse est formé selon une des règles suivantes :
a) le renfoncement est disposé dans la surface de culasse et possède la forme d'un cône dont la pointe n'est pas dirigée sur la surface de tête de piston, dans laquelle l'amorceur d'allumage est disposé sur l'axe de cône, ou
b) le renfoncement est disposé dans la surface de culasse et possède la forme d'un cône tronqué dont la surface couvrante n'est pas dirigée vers la surface de tête de piston, dans laquelle l'amorceur d'allumage est disposé sur l'axe du cône tronqué, ou
c) le renfoncement est disposé dans la surface de culasse et possède une forme étagée, qui est formée à partir de la combinaison entre un cône et au moins un cône tronqué ou à partir de la combinaison d'au moins deux cônes tronqués,
dans laquelle l'amorceur d'allumage est disposé sr l'axe du renfoncement, et/ou dans laquelle le renfoncement est formé dans la surface de tête de piston selon l'une des règles suivantes,
d) le renfoncement est disposé dans la surface de tête de piston et possède la forme d'un cône dont la pointe n'est pas dirigée sur la surface de culasse, dans laquelle l'amorceur d'allumage est disposé sur l'axe du renfoncement, ou
e) le renfoncement est disposé dans la surface de tête de piston et possède la forme d'un cône tronqué dont la surface couvrante n'est pas dirigée sur la face supérieure de cylindre, dans laquelle l'amorceur d'allumage est disposé sur l'axe du renfoncement, ou
f) le renfoncement est disposé sur la surface de tête de piston et possède une configuration étagée qui est formée à partir de la combinaison entre un cône et au moins un cône tronqué ou à partir de la combinaison d'au moins deux cônes tronqués, dans laquelle l'amorceur d'allumage est disposé sur l'axe du renfoncement,
dans laquelle il est prévu pour les règles a) à c) que l'angle entre la surface de tête de piston plane et la ligne extérieure du cône et du cône tronqué est de 40° - 50° et il est prévu pour les règles d) à f) que l'angle entre la surface de culasse plane et la ligne extérieure du cône et du cône tronqué est de 40° - 50°.

2. Chambre de combustion selon la revendication 1, **caractérisée en ce qu'**au moins une rainure annulaire est prévue dans la culasse (1) et/ou dans le piston (2) à côté du renfoncement central (3, 4), dans laquelle de manière préférée tous les renfoncements possèdent, dans la section longitudinale centrale de la chambre de combustion, la forme d'un triangle, d'un trapèze ou d'un étage.

3. Chambre de combustion selon la revendication 2, **caractérisée en ce que** l'angle entre la surface de tête de piston plane et les lignes extérieures de la rainure annulaire et du renfoncement central est de 40° - 50°, et/ou que l'angle entre la surface de culasse plane et les lignes extérieures de la rainure annulaire et du renfoncement central est de 40° - 50°.

4. Chambre de combustion selon l'une quelconque des revendications précédentes, **caractérisée en ce que** la barre (6b) dépasse du point central de la surface de tête de piston ou du point central du renfoncement (4) dans le piston (2).

5. Chambre de combustion selon l'une quelconque des revendications précédentes, **caractérisée en ce que** le rayon de la surface de base du cône peut être inférieur au rayon de cylindre ou peut être égal à celui-ci, et/ou que le rayon de la surface de base du cône tronqué peut être inférieur au rayon de cylindre ou peut être égal à celui-ci.

6. Chambre de combustion selon l'une quelconque des revendications précédentes, **caractérisée en ce qu'**au moins un moyen d'injection, en particulier une buse d'injection, pour l'injection de carburant et/ou d'air est prévu, dans laquelle au moins un desdits moyens d'injection est orienté de telle sorte que le sens d'injection n'est pas identique au sens de l'axe de chambre de combustion, dans laquelle il est avantageusement prévu que le sens d'injection est orienté selon un angle de 30° à 150°, de manière préférée de 60° à 120°, en particulier de 90° par rapport à l'axe de chambre de combustion.

7. Chambre de combustion selon la revendication 6, **caractérisée en ce que** les moyens d'injection d'air et les moyens d'injection du carburant sont disposés de manière symétrique par rapport à l'axe de chambre de combustion, dans laquelle les sens d'injection des deux moyens d'injection se situent de manière particulièrement préférée sur un axe.

8. Chambre de combustion selon l'une quelconque des revendications précédentes, **caractérisée en ce qu'**en présence de plus d'un renfoncement, une barre est disposée sur l'axe de chaque renfoncement supplément, laquelle fait office d'amorceur d'allumage supplémentaire pour le mélange carburant-air.

9. Chambre de combustion selon l'une quelconque des revendications précédentes en lien avec la revendication 2, **caractérisée en ce que** des inserts cylindriques annulaires, de préférence en métal ou en céramique, qui font office d'amorceurs d'allumage supplémentaires pour le mélange carburant-air, sont introduits de manière adaptée dans la rainure annulaire.

10. Procédé d'allumage d'un mélange carburant-air dans une chambre de combustion d'un moteur Diesel, dans lequel la chambre de combustion présente un cylindre avec une surface de culasse et un piston avec une surface de tête de piston et possède un axe de chambre de combustion et un renfoncement est prévu dans la surface de culasse et/ou la surface de tête de piston, dans lequel un amorceur d'allumage pour l'allumage du mélange carburant-air est disposé le long de l'axe de chambre de combustion (7), **caractérisé en ce que**
l'amorceur d'allumage (6, 6a, 6b) est réalisé sur la totalité de la longueur du renfoncement, dans lequel un renfoncement central (3, 4) existe dans la culasse (1) et/ou dans le piston (2), dans lequel l'amorceur d'allumage (6, 6a, 6b) est disposé sur l'axe du renfoncement central (3, 4), dans lequel
i) l'amorceur d'allumage est une barre en métal ou en céramique (6), ou
ii) l'amorceur d'allumage est constitué d'une bougie de préchauffage (6a) et d'une barre (6b),
dans lequel la barre est une barre en métal ou en céramique,
et dans lequel l'amorceur d'allumage excite un auto-allumage linéaire le long de l'axe de chambre de combustion,
dans lequel le renfoncement dans la culasse est formé selon l'une des règles suivantes :
a) le renfoncement est disposé dans la surface de culasse et possède la forme d'un cône dont la pointe n'est pas dirigée sur la surface de tête de piston, dans lequel l'amorceur d'allumage est disposé sur l'axe de cône, ou
b) le renfoncement est disposé dans la surface de culasse et possède la forme d'un cône tronqué dont la surface couvrante n'est pas dirigée vers la surface de tête de piston, dans lequel l'amorceur d'allumage est disposé sur l'axe du cône tronqué,
c) le renfoncement est disposé dans la surface de culasse et possède une configuration étagée qui est formée à partir de la combinaison entre un cône et au moins un cône tronqué ou à partir de la combinaison d'au moins deux cônes tronqués, dans lequel l'amorceur d'allumage est disposé sur l'axe du renfoncement,
et/ou dans lequel le renfoncement est formé dans la surface de tête de piston selon l'une des règles suivantes,
d) le renfoncement est disposé dans la surface de tête de piston et possède la forme d'un cône dont la pointe n'est pas dirigée sur la surface de culasse, dans laquelle l'amorceur d'allumage est disposé sur l'axe du renfoncement, ou
e) le renfoncement est disposé dans la surface de tête de piston et possède la forme d'un cône tronqué dont la surface couvrante n'est pas dirigée sur la face supérieure de cylindre, dans lequel l'amorceur d'allumage est disposé sur l'axe du renfoncement, ou
f) le renfoncement est disposé sur la surface de tête de piston et possède une configuration étagée qui est formée à partir de la combinaison entre un cône et au moins un cône tronqué ou à partir de la combinaison d'au moins deux cônes tronqués, dans lequel l'amorceur d'allumage est disposé sur l'axe du renfoncement,
dans lequel il est prévu pour les règles a) à c) que l'angle entre la surface de tête de piston plane et la ligne extérieure du cône et du cône tronqué est de 40° - 50° et il est prévu pour les règles d) à f) que l'angle entre la surface de culasse plane et la ligne extérieure du cône et du cône tronqué est de 40° - 50°.

11. Procédé selon la revendication 10, **caractérisé en ce qu'**une chambre de combustion selon l'une quelconque des revendications 2 à 9 est utilisée.

12. Moteur Diesel, **caractérisé par** une chambre de combustion selon l'une quelconque des revendications 1 à 9.
